# EUROPEAN PATENT SPECIFICATION

(11) **EP 1 430 291 B1**
(45) Date of publication and mention of the grant of the patent: **14.02.2007**
(21) Application number: 02767636.0
(22) Date of filing: 12.09.2002
(51) Int. Cl.: G01N 21/87

(54) **EXAMINING A DIAMOND**
UNTERSUCHUNG EINES DIAMANTEN
EXAMEN D'UN DIAMANT

(30) Priority: 12.09.2001 GB 0122055; 12.09.2001 GB 0122053
(43) Date of publication of application: 23.06.2004
(73) Proprietor: GERSAN ESTABLISHMENT, 9490 Vaduz (LI)
(72) Inventor: LAWSON, Simon, Craig, Maidenhead, Berkshire SL6 8DN (GB); SPEAR, Paul, Martyn, Maidenhead, Berkshire SL6 6SP (GB); MARTINEAU, Philip, Maurice, Maidenhead, Berkshire SL6 3RA (GB)
(74) Representative: Talbot-Ponsonby, Daniel Frederick
(86) International application number: PCT/GB2002/004146
(87) International publication number: WO 2003/023382

(56) References cited:
- WO-A-99/57544
- US-A- 5 880 504
- US-A- 5 883 389
- US-A- 6 014 208
- PRAWER S ET AL: "Confocal Raman strain mapping of isolated single CVD diamond crystals" DIAMOND AND RELATED MATERIALS, ELSEVIER SCIENCE PUBLISHERS, AMSTERDAM, NL, vol. 7, no. 2-5, 1 February 1998 (1998-02-01), pages 215-221, XP004115037 ISSN: 0925-9635

## Description

### Background of the Invention

The present invention relates to an apparatus for examining a diamond, primarily for detecting whether the diamond has been artificially irradiated or ion bombarded to change its colour or whether the diamond is a natural/synthetic doublet.

Natural green diamonds owe their colour to irradiation by naturally occurring radio isotopes which produce alpha-particles, when the radio isotopes are adjacent the diamond in the ground. The alpha-particles penetrate only to a depth of about 30 µm below the surface of the diamond and create radiation damage to the diamond lattice, principally in the form of lattice vacancies. The vacancies give rise to a characteristic vibronic absorption system in the red end of the visible spectrum, giving rise to a blue-to-green coloration.

However, artificial irradiation or ion bombardment (ion implantation) can be used to produce a blue-to-green colour in diamonds. This treatment is usually applied to polished diamonds but the treatment can be applied to rough diamonds. Artificial irradiation is usually carried out using high-energy electrons, which have a penetration depth in diamond of a few millimetres, considerably more than that of alpha-particle irradiation, or using fast neutrons, which have a penetration depth in diamond of a few centimetres, very considerably more than that of alpha-particle irradiation. High energy ions used for ion bombardment typically have a penetration depth of about 1 µm in diamond, considerably less than that of natural alpha-particle irradiation. Hitherto, in order to be certain whether a rough or polished blue-to-green diamond had been naturally or artificially irradiated, it was necessary to destructively cross-section the diamond and observe the depth of penetration of the colour below the surface.

Because naturally irradiated diamond gemstones can command a higher price than diamonds that owe their colour to artificial irradiation or ion bombardment, a suitable method of testing is required for the sake of consumer confidence.

Natural/synthetic doublets can be made by depositing synthetic diamond on a natural diamond, normally in its polished or part-processed state, to form part of the crown or pavilion of the doublet. There are techniques for detecting whether the diamond is a doublet - see for instance WO 94/20837, WO 95/20152, WO 96/07895, WO 96/07896, WO 97/04302 and WO 97/04303. These techniques are unsatisfactory because they cannot be automated and/or require expensive components.

It is an object of the present invention to overcome or ameliorate at least one of the disadvantages of the prior techniques, or to provide a useful alternative.

It is generally desirable to be able to examine automatically, and to provide a technique which can be used for loose diamonds or diamonds set in jewellery.

### The Invention

In its broadest aspect, the present invention provides apparatus as set forth in Claim 1 and a method as set forth in Claim 19. The remaining Claims set forth preferred or optional features of the invention.

In general terms, any change in the material of which the diamond is composed may be detected. However, the method is primarily used for detecting whether the diamond has been artificially irradiated or ion bombarded to change its colour, or for detecting whether the diamond is a natural/synthetic doublet. It would be possible to have a dual-purpose apparatus incorporating two different irradiating means for irradiating at different wavelengths; the luminescence detecting means for the two different purposes would be very similar, but the comparing means would be different.

Any characteristic of luminescence can be compared, but preferably the intensity of a spectral feature of the luminescence is compared. The luminescence detected can be normalised by ratioing it with a luminescence emission characteristic of all diamonds, preferably Raman. This normalisation procedure allows results to be corrected for changes in collection efficiency or size of stone.

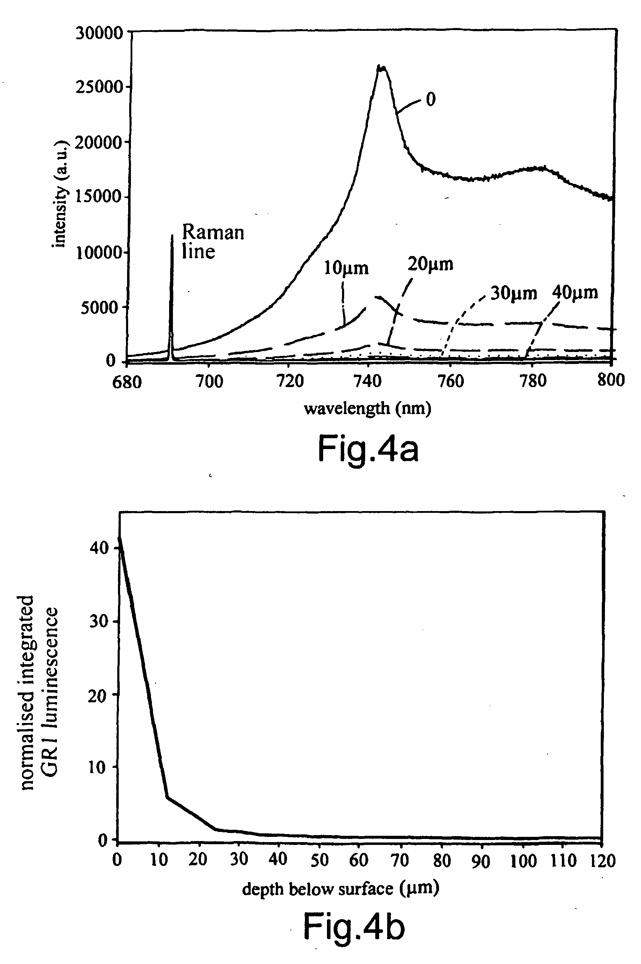

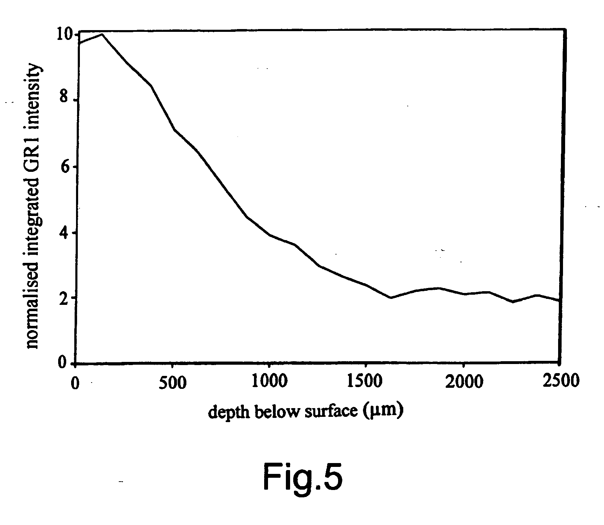

If the diamond has been artificially irradiated with high-energy electrons or fast neutrons to change its colour, the decrease in the luminescence detected with depth is less rapid than the decrease with depth in the case of a diamond which has been naturally irradiated. This is discussed in more detail hereafter in relation to Figures 4a, 4b and 5 of the accompanying drawings.

If high-energy ion bombardment is used, the decrease of luminescence detected with depth is more rapid than in the case of a diamond which has been naturally irradiated. In practice, the same irradiation wavelength and comparing means can be used to detect both artificial irradiation (in effect at one end of the scale) and ion bombardment (in effect at the other end of the scale), and therefore can indicate on a screen whether the diamond has been artificially irradiated or whether the diamond has been ion bombarded. The difference between treatment with high-energy electrons, which have a penetration depth of a few millimetres, and fast neutrons, which have a penetration depth of a few centimetres, can be detected, but only for diamonds more than 2 to 3 mm deep.

Although the irradiation or ion bombardment detection is directed primarily at rough diamonds, the method of the invention can also be used to identify artificially irradiated or ion bombarded polished diamonds. When a naturally irradiated stone is polished, the shape of the stone is changed and the depth of irradiated material is no longer uniform. In the case of a polished diamond that has been artificially irradiated or ion bombarded subsequent to being polished, if the change in intensity of luminescence with depth is measured from a number of points on the diamond it will be found to be uniform with respect to the polished surface, clearly indicating that the irradiation is artificial.

To detect artificial irradiation or ion bombardment, the N3 zero-phonon line cannot be used as there is no systematic change in the line. However, stimulating radiation of any wavelength capable of causing luminescence from the GR1 optical centre can be used. The GR1 (General Radiation 1) system is a spectroscopic feature of diamond, which has a principle sharp line at 741 nm, due to an electronic transition at a vacancy centre in diamond. The absorption analogue of this system gives rise to the blue-to-green coloration. If the GR1 optical centre is excited at room temperature with light in the wavelength range 500 to 740 nm, it produces luminescence with a strong line at 741 nm. Thus, the stimulating radiation is preferably radiation of about 500 to about 740, for instance about 633, nm wavelength, and luminescence including wavelengths from about 740 to about 745 nm is detected.

If the diamond is a doublet, there is a change in the luminescence when the detection reaches the depth where the change between natural and synthetic, or vice versa, occurs.

To detect doublets, the GR1 optical centre cannot be used, but a change in the N3 zero-phonon line can be detected. The stimulating irradiation is preferably radiation of about 300 to about 400, for instance about 325, nm wavelength and luminescence from about 330 to about 450 nm is detected. However a change in the rate of decrease of the Raman signal with depth, due to differential absorption of the stimulating irradiation, could alternatively be used to indicate a change in material of which the diamond is composed.

The whole procedure is automated. The technique can be used to detect artificial irradiation or ion bombardment in diamonds much less than about 10 points (0.1 carats) in weight, although they are preferably at least 1 mm deep. The invention can be used for doublet detection in diamonds down to about ten points (0.1 carats) in weight, and possibly less.

If stimulating radiation capable of penetrating the whole depth of the diamond is focused within the depth of the diamond, the luminescence from different depths can be detected, e.g. by substantially preventing detection of luminescence which is not substantially in the focal plane. A suitable technique is a confocal technique, using a confocal spectrometer. A confocal aperture placed at the back-focal plane of a microscope ensures that only luminescence from the focal point of the objective reaches the spectrometer detector. Luminescence from other parts of the sample fails to pass through the confocal aperture and so is not detected. The area of the selected region depends upon the diameter of the confocal aperture and the magnification of the microscope objective. The luminescence is collected from a volume effectively comprised of the selected area, determined by the confocal aperture diameter and objective magnification, and the depth of focus of the objective, determined by its numerical aperture.

Although the method is normally carried out at room temperature, a lower temperature may be used by employing a cryostat such as the Microstat N from Oxford Instruments.

### The Drawings

The invention will be further described, by way of example, with reference to the accompanying drawings, in which:
Figure 1 is a schematic vertical cross-section through apparatus in accordance with the invention, showing a polished diamond being examined in accordance with the method of the invention;
Figure 2 is a block diagram of the apparatus of Figure 1;
Figure 3 is a flow chart illustrating software in the apparatus of Figure 1;
Figure 4a shows GR1 luminescence spectra at the surface and at depth increments of 10 µm below the surface of a rough naturally alpha-irradiated diamond;
Figure 4b corresponds to Figure 4a, but shows the normalised integrated intensity of the GR1 luminescence;
Figure 5 corresponds to Figure 4b, but the diamond is an artificially electron-irradiated diamond;
Figure 6 corresponds to Figures 4b and 5, but the diamond is an artificially ion-implanted diamond;
Figure 7 is a photoluminescence/Raman spectrum of a typical type Ia natural diamond;
Figure 8 corresponds to Figure 7, but the diamond is CVD (chemical vapour deposited) diamond;
Figure 9a is the depth profile of the normalised integrated N3 luminescence intensity for a first doublet, the distance being the distance moved by the diamond doublet;
Figure 9b corresponds to Figure 9a, but the depth is the distance moved by the focal plane within the diamond doublet;
Figure 10a is the depth profile of the normalised integrated N3 luminescence intensity for a second diamond doublet, the distance moved being the distance moved by the diamond doublet; and
Figure 10b corresponds to Figure 10a, but the depth moved is the distance moved by the focal plane within the diamond doublet.

### Figure 1

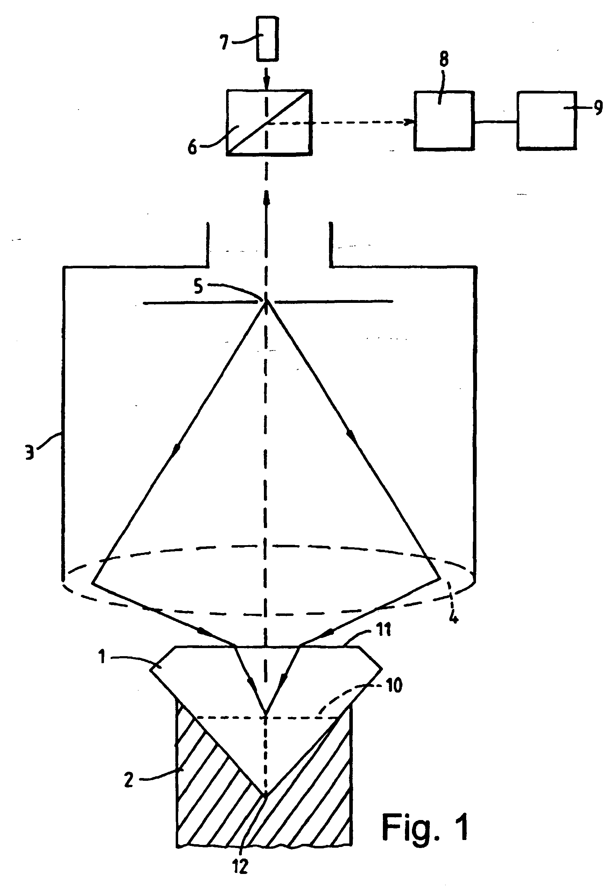

Figure 1 shows a polished diamond 1, for convenience. However, the diamond 1 could be a rough diamond or a sawn half- a rough diamond could be supported by an easily deformable material such as "Blu-Tak". There may be practical limitations regarding the surface texture of rough diamonds or sawn halves, and consequent irradiation scattering, but otherwise the technique is equally applicable to rough diamonds or sawn halves and to polished diamonds. The precise location of the surface is not determined physically but by the change in the detected luminescence. The diamond 1 is placed on a mount or stage 2 below a confocal microscope 3, the stage 2 being normal to the optical axis. The stage 2 shown is designed to receive the culet of a polished diamond 1, but it could be designed for a standard piece of jewellery such as a finger ring; alternatively a piece of jewellery could be held by an easily deformable material, as above. Normally, the table of the diamond 1 should be exposed and be normal to the optical axis. Though not illustrated, the stage 2 is carried on a table which can be moved up and down by a stepping motor. The microscope 3 has an objective lens 4 and a confocal aperture 5. Above the microscope 3, there is a beam splitter 6, a laser 7 for irradiating the diamond 1, a spectrometer 8, and a processor 9. All the parts are illustrated extremely schematically.

The confocal aperture 5 prevents light from outside the focal region entering the spectrometer 8. The instantaneous focal plane is indicated at 10 and the arrangement is such that the focal plane 10 can be scanned right through the diamond from the topmost point (here the table 11) to the bottommost point (here the culet 12). Scanning is most conveniently done by moving the stage 2 vertically, in predetermined intervals, say of 10 µm or 100 µm. The laser beam is refracted as it enters the diamond 1 and therefore the distance travelled by the focal point of the laser (within the diamond 1) at a wavelength of e.g. 633 nm is approximately 2.41 times greater than the distance travelled by the diamond 1 itself (2.41 is the refractive index of diamond at 633 nm), or approximately 2.51 times greater at a wavelength of 325 nm (2.51 is the refractive index of diamond at 325 nm).

### Figure 2

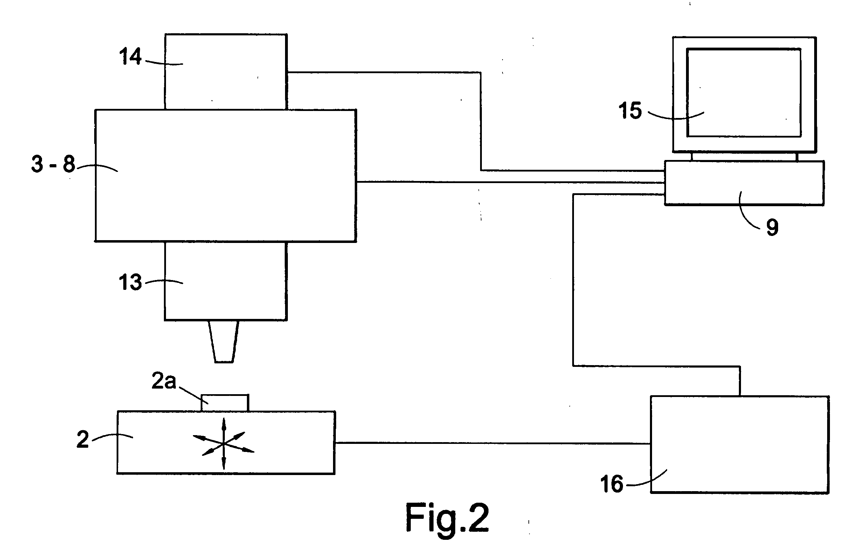

The block diagram of Figure 2 shows items 3 to 8 as a confocal spectrometer associated with a microscope 13 and having a CCD detector 14 for detecting the luminescence (in effect, part of the spectrometer 8). The processor 9 is shown with a monitor 15 for displaying the detected results. The stage 2 is shown as an xyz stage carrying a matrix 2a of diamond samples (say 5 x 5), the x, y movements (in the horizontal plane) being for enabling one diamond of the matrix of samples 2a to be positioned beneath the microscope 13. The z movement is the vertical movement discussed above.

### Figure 3

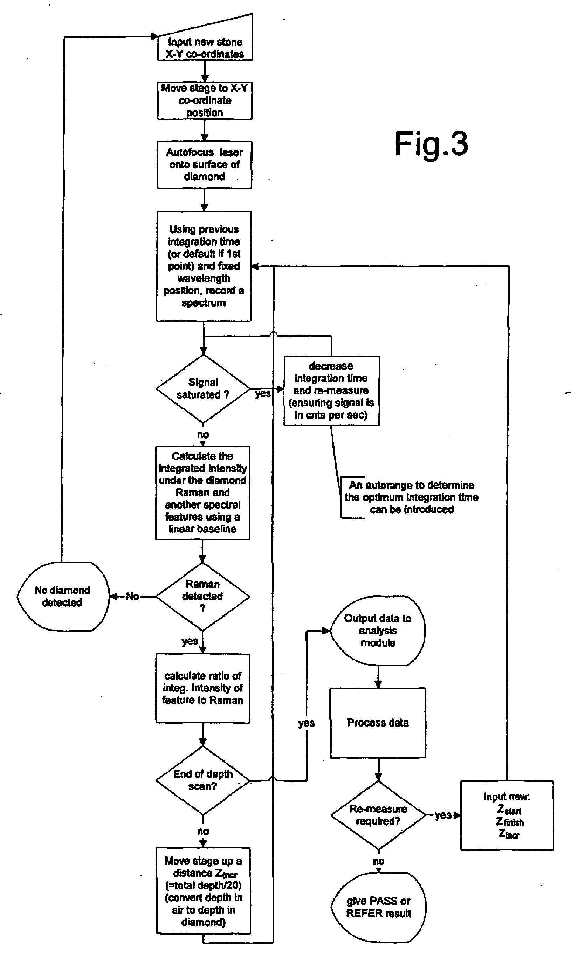

The flow chart of Figure 3 is in general self-explanatory and is not further described in detail. The stage "Process data" includes analysing the rate of change of luminescence with depth in order to identify an interface or change in material.

### Examples of Artificial Irradiation and Ion Bombardment Detection

In one suitable apparatus, the laser 7 is a He-Ne laser having a 10-20 mw-output at 633 nm. The laser 7 can be supplied together with the confocal microscope 3 and the spectrometer 8 as a LabRam Infinity Confocal Spectrometer, manufactured by J Y Horiba. Luminescence from about 680 to about 800 nm is detected. In diamond this system enables depths of 0 to 500 µm to be probed using a x100 objective lens 4 and a 50 µm confocal aperture 5. Depths of 0 to 10 mm may be probed using a x20 objective lens 4 and a 200 µm confocal aperture 5.

When using the apparatus, the step "Process data" of Figure 3 is as follows:
The profile of the Raman normalised integrated intensity of the GR1 zero-phonon-line versus depth below the sample surface is analysed.
If a significant decrease in the above parameter is observed at a depth of less than 10 microns, then the diamond is identified as potentially `Ion bombarded'.
If a significant decrease in the above parameter is observed at a depth of 500 to 2000 microns, then the diamond is identified as potentially 'Electron Irradiated'.
If no significant decrease in the above parameter is observed over depths greater than 2000 microns, then the diamond is identified as potentially 'Neutron Irradiated'.
If a significant decrease in the above parameter is observed at a depth of 15 to 35 microns, then the diamond is identified as 'Naturally Irradiated'.
The depth at which the significant decrease occurs may be determined by differentiating the signal and determining where the minimum lies using standard mathematical algorithms. The shape of the profile may be compared with the expected shape by reference to stored profile reference files.

### Figures 4a, 4b and 5

Figure 4a shows a photoluminescence/Raman spectrum recorded using the confocal spectrometer with the x100 objective lens 4 and 50 µm confocal aperture 5. The lines in Figure 4a are referenced with the depth below the surface, the line O being as recorded at the surface. The diamond Raman line is at approximately 691 nm and is shown by a sharp intensity peak. The normalisation of Figure 4b was achieved by ratioing the integrated GR1 luminescence intensity against the integrated intensity of the diamond Raman line. If the Raman signal falls to less than 10 per cent of its initial value, it can be assumed that the focal point of the probe is no longer within the diamond. By choosing the appropriate grating, CCD detector and central wavelength position of the spectrometer grating (in the spectrometer 8), both the GR1 and Raman signals may be captured within the same spectrum. Software, such as that provided with the LabRam Infinity confocal spectrometer, was configured to provide a real-time display of the depth profile. The processor 9 has suitable software to indicate automatically whether the diamond has been naturally or artificially irradiated.

The centre of the surface of the table of the diamond 1 was first positioned at the focal point of the laser beam and spectra were recorded at 10 µm intervals as the diamond 1 was moved upwards towards the objective lens 4 that focused the laser. This process was equivalent to collecting spectra as the focal point of the laser was scanned into the diamond 1 via the table.

As can be seen from Figure 4b, for the naturally alpha-irradiated diamond, the GR1 luminescence was substantially confined to within 30 µm of the surface whereas (as shown in Figure 5) for the artificially electron-irradiated diamond, the GR1 luminescence is significantly intense over 1 mm below the surface (the different scales of Figures 4b and 5 should be noted).

### Figure 6

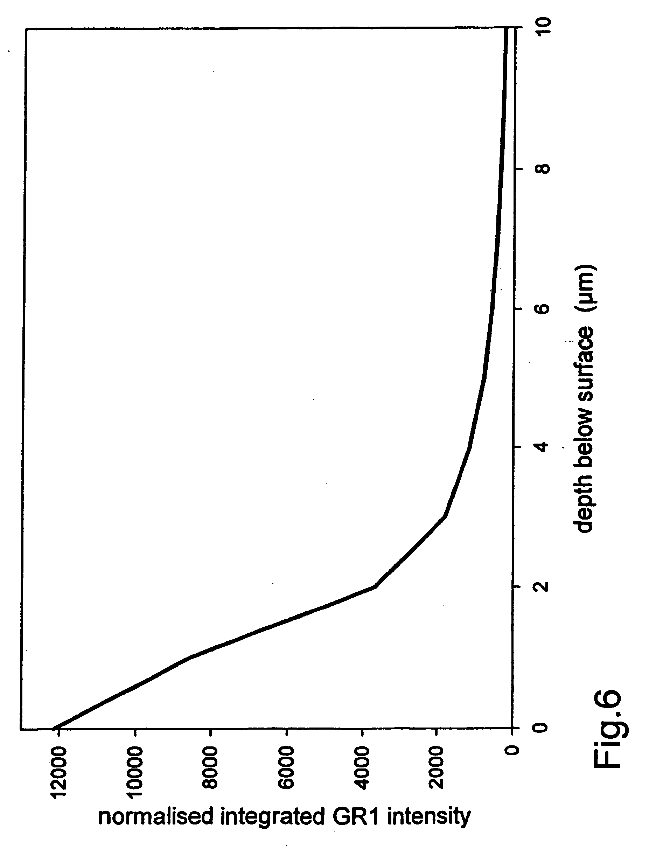

Figure 6 shows the normalised integrated intensity curve for an ion bombarded diamond, the profile differing from that of Figures 4b and 5, as well as the scales being very different, the depth of implantation being very low.

A graph of the normalised integrated intensity of the GR1 luminescence for a neutron bombarded diamond would be a horizontal line, again differing from the spectra of Figure 4b, and Figure 5.

### Examples of Doublet Detection

In one suitable apparatus, the laser 7 is a He-Cd laser having a 10-100 mW output at 325 nm. The laser 7 can be supplied together with the confocal microscope 3 and the spectrometer 8 as a LabRam Infinity Confocal Spectrometer, manufactured by J Y Horiba. Luminescence from about 330 to about 450 nm is detected. In diamond, this system enables depths of 0 to 500 µm to be probed using a x100 objective and a 50 µm confocal aperture 5. Depths of 0 to 10 mm may be probed using a x20 objective and a 200 µm confocal aperture 5.

By choosing the appropriate grating, CCD detector and central wavelength position of the spectrometer grating (in the spectrometer 8), both the N3 and Raman signals may be captured within the same spectrum. Software, such as that provided with the LabRam Infinity confocal spectrometer, was configured to provide a real-time display of the depth profile.

The processor 9 has suitable software to indicate automatically whether the diamond is a doublet. In the step "Process data" of Figure 3, the software normalises the integrated intensity of the N3 zero-phonon line relative to the integrated intensity of the diamond Raman line. The profile of the Raman normalised integrated intensity of the N3 zero-phonon-line versus depth below sample surface is analysed. If a significant decrease or increase in the above parameter is observed, then the diamond will be referred as a possible doublet. If the profile is broadly flat (and non-zero) then the diamond will be passed as a 'non-doublet'. As above, if the Raman signal falls to less than 10 per cent of its initial value, it can be assumed that the focal point of the probe is no longer within the diamond.

### Figure 7

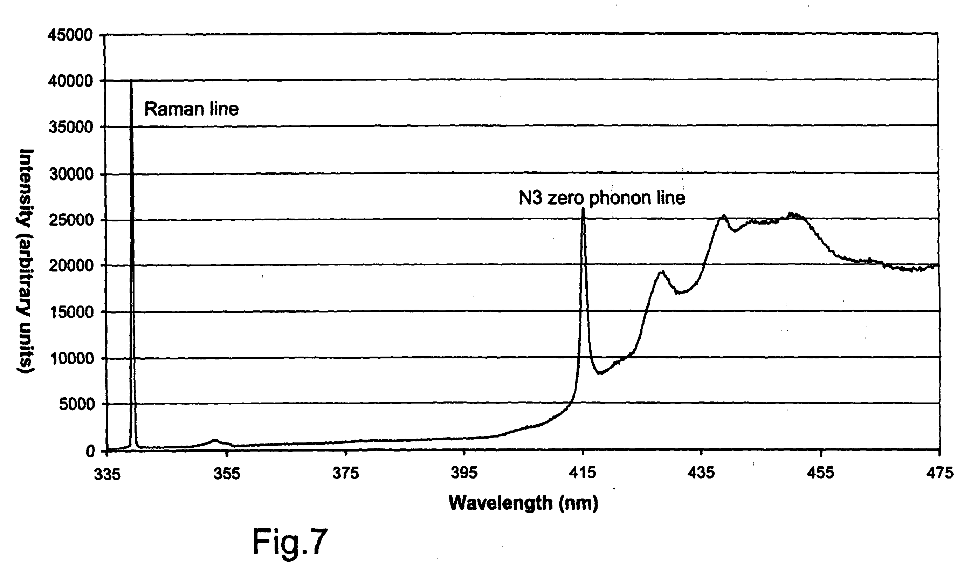

Figure 7 is a typical photoluminescence/Raman spectrum for type la natural diamond, collected confocally at room temperature with 325 nm He-Cd laser excitation. It contains the N3 zero phonon line at 415 nm with associated vibronic structure at longer wavelengths. More than 95% of all natural diamonds have the N3 zero phonon line; those that do not are selected out beforehand. The spectrum also contains the Raman line at approximately 339 nm, shown as a sharp intensity peak.

### Figure 8

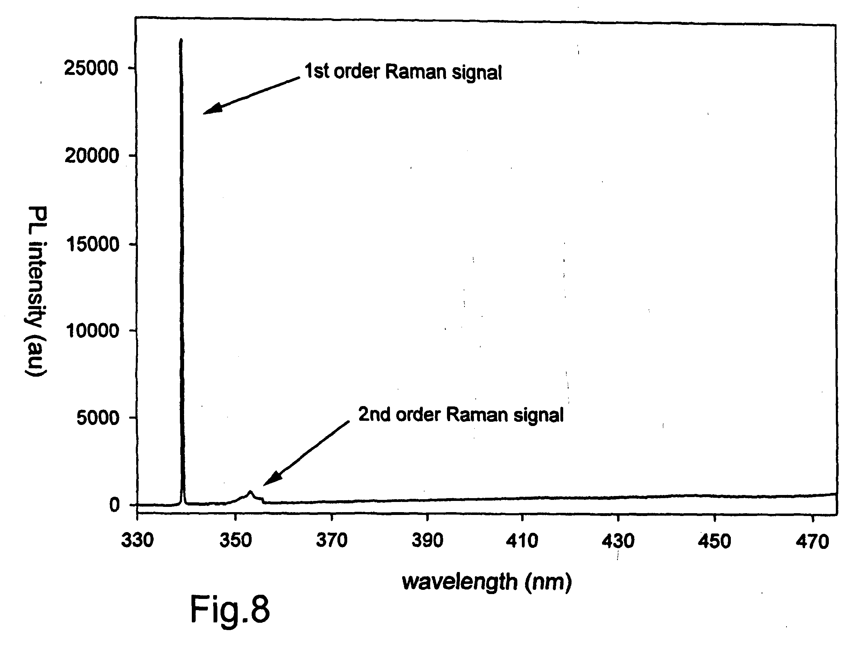

Figure 8 is a similar spectrum for CVD synthetic diamond. It does not contain the N3 zero phonon line at 415 nm or its associated vibronic structure.

### Figures 9a and 9b

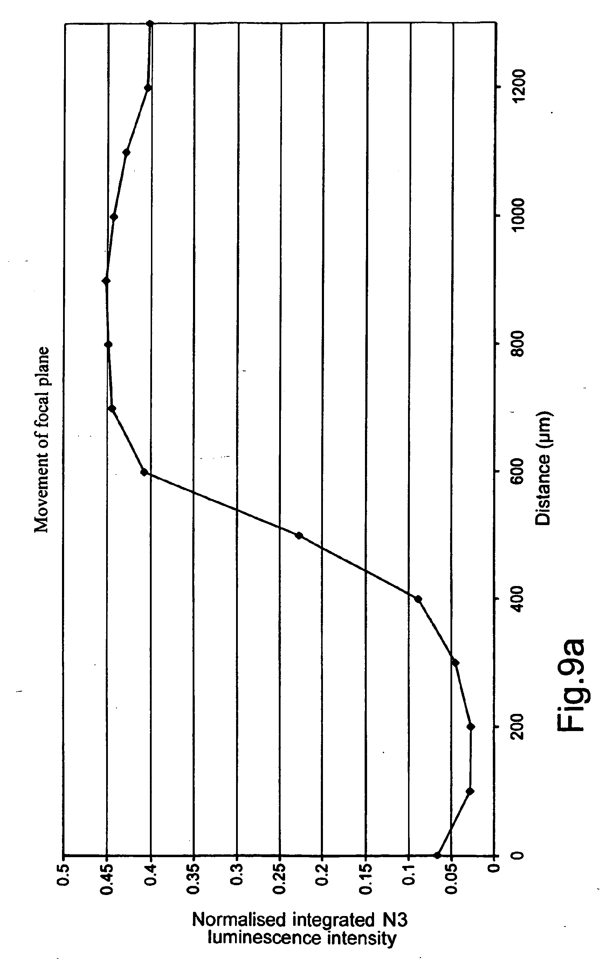

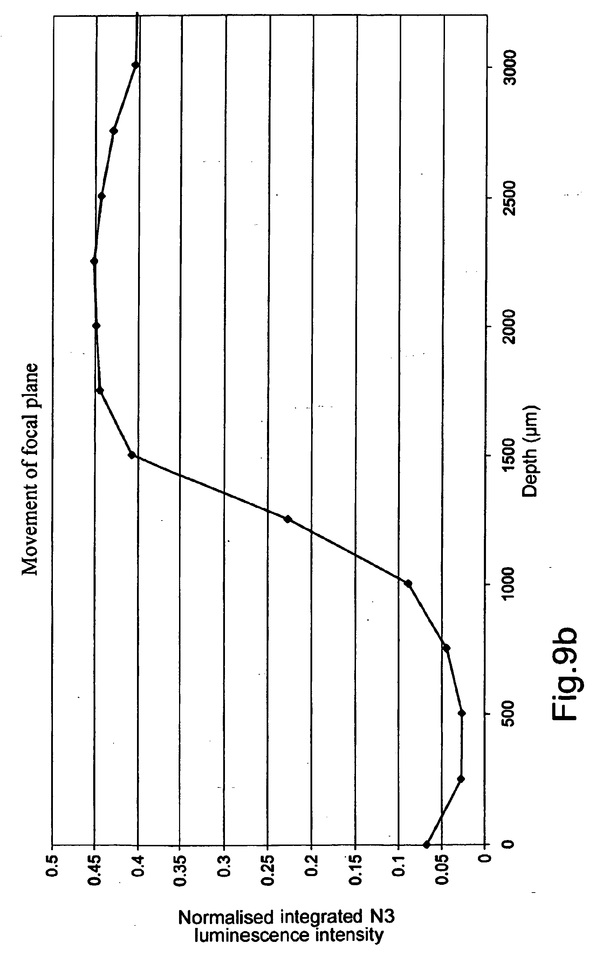

Figures 9a and 9b show the measured confocal depth profiles of normalised N3 luminescence for a first doublet, which was produced for experimental purposes only. The first doublet was a round brilliant, partly composed of natural type la diamond and partly of CVD synthetic diamond. It has a CVD synthetic diamond crown and the interface between this component and the natural diamond component was known to be 0.86 mm below the table, the total depth of the stone being 3.19 mm.

The centre of the surface of the table of the doublet 1 was first positioned at the focal point of the laser beam and spectra were recorded at 100 µm intervals as the doublet 1 was moved upwards towards the objective lens 4 that focused the laser. This process was equivalent to collecting spectra as the focal point of the laser was scanned into the doublet 1 via the diamond table.

As explained above, the distance travelled by the focal point of the laser within the stone is approximately 2.51 times greater than the distance travelled by the stone itself. In Figure 9a, the horizontal-axis is the distance travelled by the stone from the position in which the table is at the focal point of the laser. In Figure 9b, the horizontal-axis is this distance multiplied by 2.51. This corresponds approximately to the depth of the focal point of the laser beam below the diamond table.

The change in the graph of Figures 9a and 9b is not abrupt because of the relatively poor resolution at the depths that are being probed, and the intervals between measurements. However the precise depth of the interface is not usually of concern, only whether or not there is an interface.

### Figures 10a and 10b

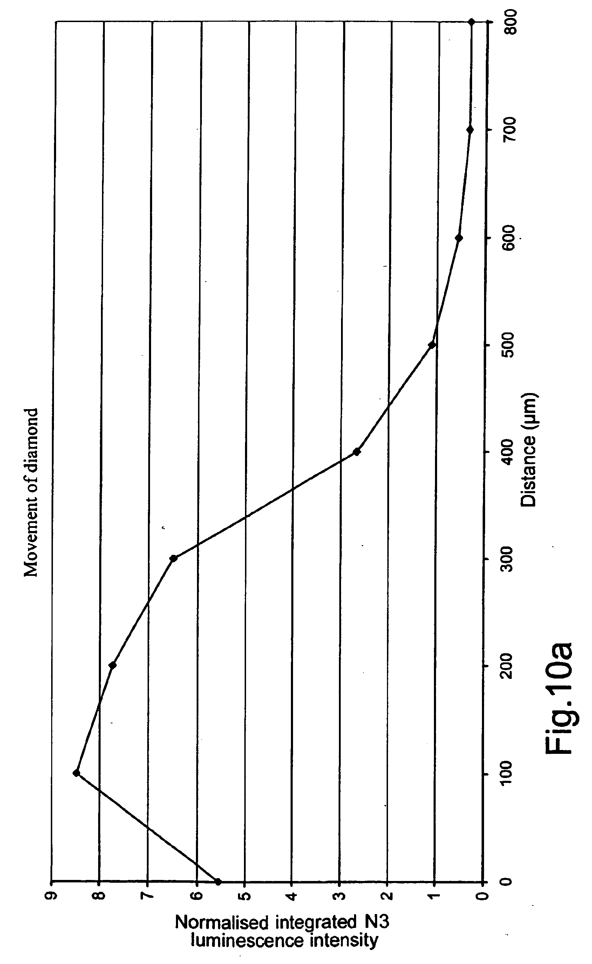

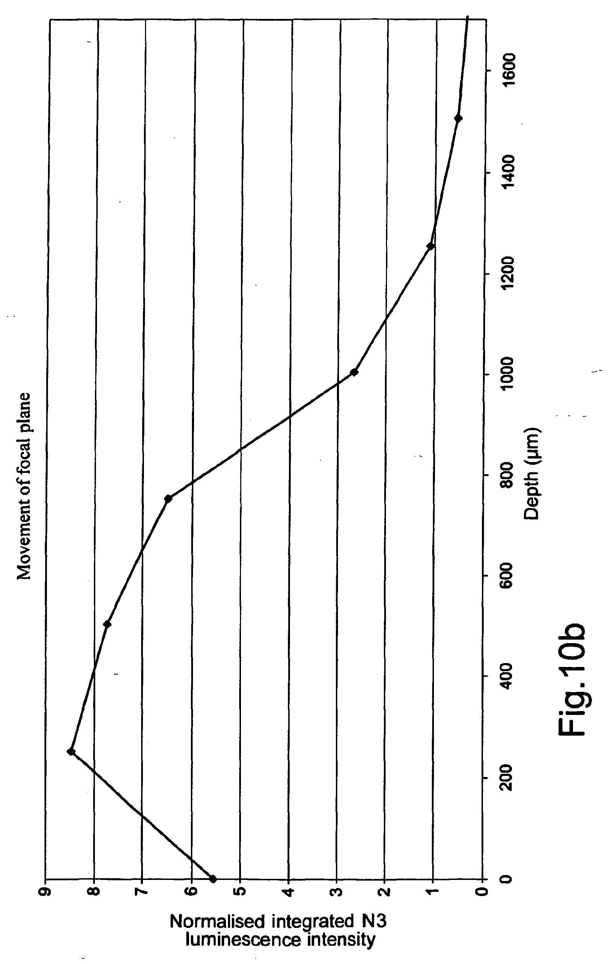

Figures 10a and 10b correspond closely to Figures 9a and 9b, but show the spectra for a second doublet, which was also produced for experimental purposes only. The second doublet was a round brilliant, partly composed of natural type la diamond and partly of CVD diamond. It has a natural type la diamond crown and the interface between this component and the CVD synthetic diamond component is 0.75 mm below the table, the total depth of the stone being 1.64 mm.

The second doublet was positioned as for the first doublet of Figures 9a and 9b.

## Claims

1. Apparatus for automatically indicating a change in material within a gemstone diamond (1), comprising:
means (7) for irradiating the diamond with irradiation to stimulate the emission of luminescence;
means (2) for scanning the irradiation;
means (8, 14) for automatically detecting the luminescence;
means (9) for automatically comparing luminescences so detected and thereby detecting a change in the material of which the diamond is composed; and
means (15) responsive to said comparing means for automatically indicating said change in material;
**characterized in that** the irradiating means, scanning means and detecting means are provided in a confocal spectrometer arranged to carry out a confocal technique, whereby:
the stimulating irradiation is capable of penetrating the whole depth of the diamond (1) and is focusable at a focal plane (10) within the depth of the diamond;
the scanning means are arranged to scan the focal plane (10) of the stimulating radiation right through the diamond; and
the luminescence detecting means (8, 14) are arranged to sense the luminescences originating at different depths within the diamond by collecting the luminescences from the instantaneous focal planes;
wherein the comparing means (9) are arranged to compare the luminescences at the different focal planes.

2. The apparatus of Claim 1, wherein the detecting and comparing means are arranged to detect and compare the intensity of a spectral feature of the luminescence.

3. The apparatus of Claim 1 or 2, wherein the scanning means (2) are arranged such that the depth at which luminescence is detected moves automatically by fixed increments.

4. The apparatus of any of the preceding Claims, wherein the comparing means (9) include software for analysing the rate of change of luminescence with depth in order to identify an interface or change in material.

5. The apparatus of any of the preceding Claims, arranged to carry out a technique which substantially prevents detection of luminescence which is not in the focal plane at said depth.

6. The apparatus of any of the preceding Claims, wherein the luminescence detected is normalised by ratioing it with a luminescence emission characteristic of all diamonds.

7. The apparatus of Claim 6, wherein said characteristic luminescence emission is Raman.

8. The apparatus of any of the preceding Claims, and arranged to indicate whether the diamond (1) has been artificially irradiated to change its colour, the indicating means (15) indicating whether the diamond has been artificially irradiated.

9. The apparatus of any of the preceding Claims, and arranged to indicate whether the diamond (1) has been ion bombarded to change its colour, the indicating means indicating whether the diamond has been ion bombarded.

10. The apparatus of any of the preceding Claims, wherein the irradiating means (7) cause luminescence from the GR1 optical centre.

11. The apparatus of any of the preceding Claims, wherein the stimulating irradiation is irradiation of about 500 to about 740 nm wavelength.

12. The apparatus of Claim 11, wherein the stimulating irradiation is irradiation of about 633 nm wavelength.

13. The apparatus of any of the preceding Claims, wherein luminescence from about 680 to about 800 nm wavelength is detected.

14. The apparatus of any of the preceding Claims, and arranged to indicate whether the diamond (1) is a natural/synthetic doublet.

15. The apparatus of any of Claims 1 to 7 and 14, wherein the irradiating means cause luminescence at the N3 optical centre to give rise to the N3 zero-phonon line.

16. The apparatus of any of Claims 1 to 7 and 14, wherein the stimulating irradiation is irradiation of about 300 to about 400 nm wavelength.

17. The apparatus of Claim 16, wherein the stimulating irradiation is irradiation of about 325 nm wavelength.

18. The apparatus of Claim 16 or 17, wherein luminescence from about 330 to about 450 nm wavelength is detected.

19. A method of examining a gemstone diamond in order to detect whether there is a change in material within the diamond, comprising using the apparatus of any of the preceding Claims, whereby the change in material is automatically indicated.

20. The method of Claim 19, wherein the diamond is a polished gemstone diamond.

## Patentansprüche

1. Vorrichtung zur automatischen Anzeige einer Veränderung im Material innerhalb eines Schmucksteindiamanten (1), umfassend:
Mittel (7) zur Bestrahlung des Diamanten mit Lichtstrahlen, um die Aussendung von Lumineszenz anzuregen;
Mittel (2) zur Abtastung der Bestrahlung;
Mittel (8, 14) zur automatischen Feststellung der Lumineszenz;
Mittel (9) zum automatischen Vergleich der auf diese Weise festgestellten Lumineszenzen und dabei der Feststellung einer Veränderung im Material, aus dem der Diamant zusammengesetzt ist; und
auf die vergleichenden Mittel reagierende Mittel (15) zur automatischen Anzeige der Veränderung im Material;
**gekennzeichnet dadurch, dass** die Mittel zur Bestrahlung, zur Abtastung und zur Feststellung sich in einem konfokalen Spektrometer befinden, das so angeordnet ist, um eine konfokale Technik auszuführen, wobei:
die stimulierende Bestrahlung fähig ist, die ganze Tiefe des Diamanten (1) zu durchdringen und auf einer fokalen Ebene (10) innerhalb der Tiefe des Diamanten fokussierbar ist; und
die Mittel zur Abtastung so angeordnet sind, um die fokale Ebene (10) der stimulierenden Bestrahlung durch den Diamanten abzutasten; und
die Mittel zur Feststellung der Lumineszenz (8, 14) so angeordnet sind, um die Lumineszenz, die aus verschiedenen Tiefen innerhalb des Diamanten stammt, zu erkennen, wobei die Lumineszenz von den fokalen Ebenen unmittelbar erfasst wird;
wobei die vergleichenden Mittel (9) so angeordnet sind, um die Lumineszenz an den verschiedenen fokalen Ebenen zu vergleichen.

2. Vorrichtung von Anspruch 1, wobei die feststellenden und vergleichenden Mittel so angeordnet sind, um die Intensität eines spektralen Merkmals der Lumineszenz festzustellen und zu vergleichen.

3. Vorrichtung von Anspruch 1 oder 2, wobei die Mittel zur Abtastung (2) so angeordnet sind, dass die Tiefe, bei welcher die Lumineszenz festgestellt wird, sich nach festen Schrittgrößen automatisch bewegt.

4. Vorrichtung nach einem vorhergehenden Anspruch, wobei die vergleichenden Mittel (9) eine Software zur Analyse der Veränderungsrate der Lumineszenz mit der Tiefe beinhalten, um eine Nahtstelle oder eine Veränderung im Material zu identifizieren.

5. Vorrichtung nach einem vorhergehenden Anspruch, die so angeordnet ist, um eine Technik auszuführen, die grundlegend die Feststellung von Lumineszenz vermeidet, die nicht in der fokalen Ebene in der Tiefe liegt.

6. Vorrichtung nach einem vorhergehenden Anspruch, wobei die festgestellte Lumineszenz **dadurch** normalisiert wird, indem sie mit einer für alle Diamanten charakteristischen Abstrahlung ins Verhältnis gesetzt wird.

7. Vorrichtung von Anspruch 6, wobei die charakteristische Abstrahlung der Lumineszenz Raman ist.

8. Vorrichtung nach einem vorhergehenden Anspruch, die so angeordnet ist, um anzuzeigen, ob der Diamant (1) künstlich bestrahlt worden ist, um seine Farbe zu verändern, wobei die anzeigenden Mittel (15) zeigen, ob der Diamant künstlich bestrahlt worden ist.

9. Vorrichtung nach einem vorhergehenden Anspruch, die so angeordnet ist, um anzuzeigen, ob der Diamant (1) mit Ionen beschossen worden ist, um seine Farbe zu verändern, wobei die anzeigenden Mittel zeigen, ob der Diamant mit Ionen beschossen worden ist.

10. Vorrichtung nach einem vorhergehenden Anspruch, wobei die bestrahlenden Mittel (7) eine Lumineszenz aus dem optischen GR1 Zentrum verursachen.

11. Vorrichtung nach einem vorhergehenden Anspruch, wobei die stimulierende Bestrahlung eine Bestrahlung von ungefähr 500 bis ungefähr 740 nm Wellenlänge ist.

12. Vorrichtung von Anspruch 11, wobei die stimulierende Bestrahlung eine Bestrahlung von ungefähr 633 nm Wellenlänge ist.

13. Vorrichtung nach einem vorhergehenden Anspruch, wobei Lumineszenz von ungefähr 680 bis ungefähr 800 nm Wellenlänge festgestellt wird.

14. Vorrichtung nach einem vorhergehenden Anspruch, die so angeordnet ist, um anzuzeigen, ob der Diamant (1) eine natürliche bzw. synthetische Dublette ist.

15. Vorrichtung nach Anspruch 1 bis 7 und 14, wobei die bestrahlenden Mittel Lumineszenz beim optischen N3 Zentrum verursachen, um eine N3 Null-Phonon Linie zu verursachen.

16. Vorrichtung nach Anspruch 1 bis 7 und 14, wobei die stimulierende Bestrahlung eine Bestrahlung von ungefähr 300 bis ungefähr 400 nm Wellenlänge ist.

17. Vorrichtung nach Anspruch 16, wobei die stimulierende Bestrahlung eine Bestrahlung von ungefähr 325 nm Wellenlänge ist.

18. Vorrichtung nach Anspruch 16 oder 17, wobei eine Lumineszenz von ungefähr 330 bis ungefähr 450 nm Wellenlänge festgestellt wird.

19. Verfahren zur Begutachtung eines Schmucksteindiamanten, um festzustellen, ob es eine Veränderung im Material innerhalb des Diamanten gibt, umfassend eine Vorrichtung nach einem vorhergehenden Anspruch, wobei die Veränderung im Material automatisch angezeigt wird.

20. Verfahren von Anspruch 19, wobei der Diamant ein polierter Schmucksteindiamant ist.

## Revendications

1. Dispositif pour indiquer automatiquement un changement de matériel à l'intérieur d'un diamant pierre précieuse (1), comprenant
des moyens (7) pour irradier le diamant avec de l'irradiation pour stimuler l'émission de luminescence;
des moyens (2) pour balayer l'irradiation;
des moyens (8, 14) pour détecter automatiquement la luminescence;
des moyens (9) pour comparer automatiquement les luminescences ainsi détectées et par ce moyen détecter un changement dans le matériel dont le diamant est composé; et
des moyens (15) sensibles aux lesdits moyens de comparaison pour indiquer automatiquement ledit changement de matériel;
**caractérisé en ce que** les moyens irradiants, les moyens de balayage, et les moyens de détection sont fournis dans un spectromètre confocal conçu pour effectuer une technique confocale, par laquelle :
l'irradiation stimulante est capable de pénétrer toute la profondeur du diamant (1) et mise au point sur un plan focal (10) dans la profondeur du diamant;
les moyens de balayage sont conçus pour balayer le plan focal (10) de l'irradiation stimulante au travers du diamant; et
les moyens de détections de la luminescence (8, 14) sont conçus pour capter les luminescences qui se produisent aux différentes profondeurs à l'intérieur du diamant en captant les luminescences des plans focaux instantanés;
dans lequel les moyens de comparaison (9) sont conçus pour comparer les luminescences aux différents plans focaux.

2. Dispositif selon la revendication 1, dans lequel les moyens de détection et de comparaison sont conçus pour détecter et comparer l'intensité d'une caractéristique spectrale de la luminescence.

3. Dispositif selon la revendication 1 ou 2, dans lequel les moyens de balayage (2) sont conçus de sorte que la profondeur à laquelle la luminescence est détectée se déplace automatiquement par des paliers fixés.

4. Dispositif selon l'une quelconque des revendications précédentes, dans lequel les moyens de comparaison (9) incluent un software pour analyser le taux de changement de la luminescence avec la profondeur de façon à identifier un interface ou changement de matériel.

5. Dispositif selon l'une quelconque des revendications précédentes, conçu pour effectuer une technique qui empêche substantiellement la détection de luminescence qui n'est pas dans le plan focal à ladite profondeur.

6. Dispositif selon l'une quelconque des revendications précédentes, dans lequel la luminescence détectée est normalisée en la rapportant à une émission de luminescence caractéristique de tous les diamants.

7. Dispositif selon la revendication 6, dans lequel ladite émission de luminescence caractéristique est Raman.

8. Dispositif selon l'une quelconque des revendications précédentes, et conçu pour indiquer si le diamant (1) a été irradié artificiellement pour changer sa couleur, les moyens d'indication (15) indiquant si le diamant a été irradié artificiellement.

9. Dispositif selon l'une quelconque des revendications précédentes, et conçu pour indiquer si le diamant (1) a été bombardé par des ions pour changer sa couleur, les moyens d'indication (15) indiquant si le diamant a été bombardé par des ions.

10. Dispositif selon l'une quelconque des revendications précédentes, dans lequel les moyens d'irradiation (7) provoquent de la luminescence depuis le centre optique GR1.

11. Dispositif selon l'une quelconque des revendications précédentes, dans lequel l'irradiation stimulante est une irradiation de longueur d'onde d'environ 500 à environ 740 nm.

12. Dispositif selon la revendication 11, dans lequel l'irradiation stimulante est une irradiation de longueur d'onde d'environ 633 nm.

13. Dispositif selon l'une quelconque des revendications précédentes, dans lequel la luminescence de longueur d'onde d'environ 680 à environ 800 nm est détectée.

14. Dispositif selon l'une quelconque des revendications précédentes, et conçu pour indiquer si le diamant (1) est un doublet naturel/synthétique.

15. Dispositif selon l'une quelconque des revendications 1 à 7 et 14, dans lequel les moyens d'irradiation provoquent de la luminescence au centre optique N3 pour causer la ligne N3 zéro-phonon.

16. Dispositif selon l'une quelconque des revendications 1 à 7 et 14, dans lequel l'irradiation stimulante est une irradiation de longueur d'onde d'environ 300 à environ 400 nm.

17. Dispositif selon la revendication 16, dans lequel l'irradiation stimulante est une irradiation de longueur d'onde d'environ 325 nm.

18. Dispositif selon les revendications 16 et 17, dans lequel la luminescence de longueur d'onde d'environ 330 à environ 450 nm est détectée.

19. Méthode pour examiner un diamant pierre précieuse de façon à détecter s'il y a un changement de matériel dans le diamant, comprenant l'utilisation du dispositif selon l'une quelconque des revendications précédentes, par lequel le changement dans le matériel est automatiquement indiqué.

20. Méthode selon la revendication 19, dans laquelle le diamant est un diamant pierre précieuse poli.
